# EUROPEAN PATENT APPLICATION

(11) **EP 1 183 924 A1**
(43) Date of publication of application: **06.03.2002**
(21) Application number: 01203141.5
(22) Date of filing: 20.08.2001
(51) Int. Cl.: A01C 17/00

(54) **A device for and a method of spreading granular and/or pulverulent material, and a container for containing such a material**

(30) Priority: 01.09.2000 NL 1016080
(71) Applicant: Lely Enterprises AG, 6300 ZUG (CH)
(72) Inventor: van der Lely, Alexander, 3065 NA Rotterdam (NL); Seerden, Adrianus Maria, 2231 BW Rijsburg (NL); van der Waal, Pieter Jacob, 3145 LB Maassluis (NL)
(74) Representative: Corten, Maurice Jean F.M.

(57) **Abstract**

A device for spreading granular and/or pulverulent material, in particular fertilizer, comprising at least one blade (2). The angle assumed by the blade is adjustable by angle adjusting means (22). The angle adjusting means (22) are driven. A method of spreading granular and/or pulverulent material, in which method a device according to the invention is used. In this method granular and/or pulverulent material is supplied to the device in containers. The method comprises the step of providing the container with a code, said code representing data regarding the contents of the container. A container for granular and/or pulverulent material, in particular fertilizer, suitable for use in a method according to the invention. The container is provided with a bar code, said bar code representing data regarding the contents of the container.

## Description

The invention relates to a device for spreading granular and/or pulverulent material, in particular fertilizer, comprising at least one blade, the angle assumed by the blade being adjustable by angle adjusting means.

Such a device is known from EP-A-0655187. In this known implement the blade can be secured in a certain position in dependence of the type of material and the desired working width. For that purpose there are provided a plurality of marks indicating possible adjustable positions. Securing of the blade takes place manually by means of a nut for example.

The invention has for its object to provide a device for spreading granular and/or pulverulent material, by means of which a desired angular position of the blade can quickly be adjusted in an accurate and simple manner.

For that purpose, according to the invention a device of the above-described type is characterized in that the angle adjusting means are driven. As a result thereof manual adjustment of the angular position is superfluous and adjustment errors created thereby are prevented.

Preferably, the device is provided with angle measuring means for measuring the angle of the blade. The measuring results of the angle measuring means may be used inter alia for checking purposes.

An embodiment of a device according to the invention relates to a blade, said blade comprising a first blade portion and a second blade portion, the first blade portion and the second blade portion being shiftable relative to each other in a telescoping manner, at least one of the blade portions being longitudinally adjustable relative to the other one and lockable in various positions. Such a blade is known per se from EP-A-0655187. In the known device one blade portion can be locked relatively accurately in the end positions, while an accurate locking in intermediate positions is more difficult to realize.

In an embodiment of a device according to the invention one blade portion is lockable exclusively in a limited number of positions. As a result thereof, in contrast with the state of the art, it is not possible to place the two blade portions in a position relative to each other that does not belong to that limited number of positions.

Preferably, one blade portion is automatically, mechanically lockable in a limited number of positions. In this case by 'automatically, mechanically lockable' is meant that intervention of a person is not required for performing the actual action of locking, such as screwing up a butterfly nut.

For the purpose of preventing in a simple manner that one blade portion is positioned in between two of the limited number of positions, or in an undesired position, the device preferably comprises pre-tensioning members for forcing one blade portion to at least one of the number of positions. Thus one blade portion is always placed in one of the limited number of positions.

For the purpose of making manual shifting of one blade portion superfluous, and thus preventing adjustment errors created thereby, the device preferably comprises drive means for shifting one blade portion to a position in a driven manner.

For the purpose of shifting one blade portion into a desired position in a simple manner, a preferred embodiment of a device according to the invention comprises control means, preferably electronic control means, for controlling the drive means.

Moreover, by a continuous activation of the drive means, one blade portion can be kept in a desired position and is thus lockable; however, in this case, a continuous activation is absolutely essential.

In a preferred embodiment of a device according to the invention, automatic, mechanical locking means are formed in that the first respectively the second blade portion is provided with a row of holes, and in that the second respectively the first blade portion is provided with a protrusion that can be moved from a retracted to a projecting position and be placed in a hole.

Alternatively or additionally, the first respectively the second blade portion is provided with an elongated slotted hole with lateral recesses, and the second respectively the first blade portion is provided with a pin that can be moved from a retracted to a projecting position and be placed in a recess.

For the purpose of not requiring a direct, for example mechanical, pneumatic or hydraulic, connection between control means and drive means, the control means preferably comprise a transmitter for transmitting control signals, a receiver for receiving the control signals and an activating member for the drive means, operated by the receiver in dependence of the control signals received, for shifting one blade portion. The transmitter is preferably operable by a driver of the device.

An extremely accurate and user-friendly device is provided when the control means comprise a computer, provided with an inputting means for inputting data and with a calculating member for calculating control signals corresponding with the inputted data for shifting one blade portion.

For the purpose of limiting input errors as much as possible, the inputting means comprise a scanning device for a code, in particular a bar code, the bar code representing data to be inputted.

In a preferred embodiment of a device according to the invention, the device comprises position measuring means for measuring the position of the first blade portion relative to the second blade portion. Such position measuring means provide the possibility of observing continuously the adjusted and locked position.

In an embodiment of a device according to the invention, in which the second blade portion is provided with an end portion that is adjustable in height, it is advantageous when the end portion is drivable by end portion drive means. Such a blade portion provided with an end portion is known per se from EP-A-0655187. However, a driven end portion is not known therefrom. Such a driven end portion offers comparable advantages as a driven second blade portion. The device is preferably provided with height measuring means for measuring the height of the adjustable end portion.

The measuring means offer the possibility of checking the quantities measured by them. The measuring means are provided in an advantageous manner with transmitting members for transmitting measuring results to the control means. In this manner it is possible for the control means to check the quantities measured and, if required, to supply a signal when an undesired situation occurs. To that end it is advantageous when the control means are provided with comparing means for comparing the inputted data (i.e. the desired position) with the measuring results (i.e. the adjusted position).

The invention further relates to a method of spreading granular and/or pulverulent material, in which method a device according to the invention is used, and in which method granular and/or pulverulent material is supplied to the device in containers, characterized in that the method comprises the step of providing the container with a code, said code representing data regarding the contents of the container. In this manner the code can be used for shifting one blade portion.

In a preferred embodiment the method according to the invention comprises the step of using a bar code as a code, and the step of reading the bar code on the container by means of the scanning device. As a result thereof the input of the code is simplified, so that input errors are at least for the greater part prevented.

Preferably, the data relate to at least one of the characteristics belonging to the group consisting of the weight, the spreading in weight, the granule size, the spreading in granule size.

The invention further relates to a container for granular and/or pulverulent material, in particular fertilizer, suitable for use in a method according to the invention, characterized in that the container is provided with a bar code, said bar code representing data regarding the contents of the container. Preferably, the data relate to at least one of the characteristics belonging to the group consisting of the weight, the spreading in weight, the granule size, the spreading in granule size.

The invention will be elucidated hereinafter by way of example with reference to the embodiments shown in the drawing, in which:
Figure 1 is a schematic side view of a device for spreading fertilizer according to the invention, said device being connected to a tractor;
Figure 2 is a schematic plan view of a device for spreading fertilizer according to the invention;
Figure 3 is a schematic cross-sectional view of a part of an embodiment of a blade;
Figure 4 is a schematic cross-sectional view of a part of an alternative embodiment of a blade, and
Figure 5 is a schematic view of control means to be used in a device for spreading fertilizer according to the invention.

The invention will be explained in further detail with reference to a fertilizer spreader as a device for spreading granular and/or pulverulent material. However, it will be obvious that the invention can also be applied to a device for spreading other granular and/or pulverulent material, such as salt for icy roads, sand, pesticides, herbicides and the like.

The invention will be described hereinafter with reference to blades disposed on a spreading disc. However, it will be obvious that also self-supporting blades or blades mounted in another manner can be applied in the invention.

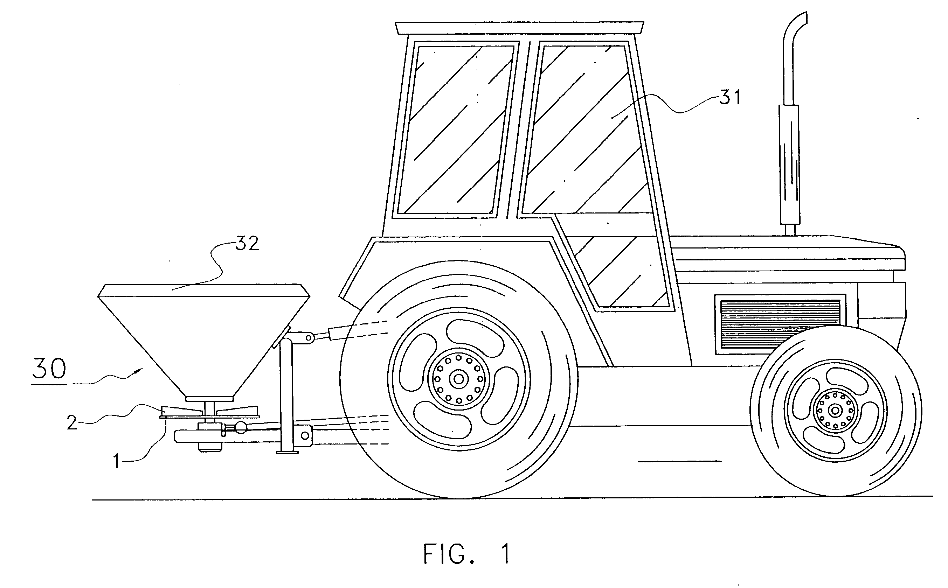

Figure 1 shows schematically a perspective view of a fertilizer spreader 30 which is carried by a tractor 31. The fertilizer spreader 30 comprises a hopper 32 for fertilizer. Below the hopper 32 there is disposed a spreading disc 1 carrying at least one blade 2. By rotation of the spreading disc 1, fertilizer coming from the hopper 32 will come against the blade 2 and will thus be spread. The degree of spreading, also called the working range, depends inter alia on the weight and the granule size of the fertilizer, the rotation speed of the spreading disc, the length of the blade, the angular position of the blade on the spreading disc, and the height adjustment of the end of the blade relative to the spreading disc.

For the purpose of adjusting the length of the blade, it is known that the blade 2; 2'; 2" comprises a first blade portion 3; 3'; 3" and a second blade portion 4; 4'; 4", the first blade portion 3; 3'; 3" and the second blade portion 4; 4'; 4" being shiftable relative to each other in a telescoping manner, at least one 4; 4'; 4" of the blade portions being longitudinally adjustable relative to the other one 3; 3'; 3" and lockable in various positions.

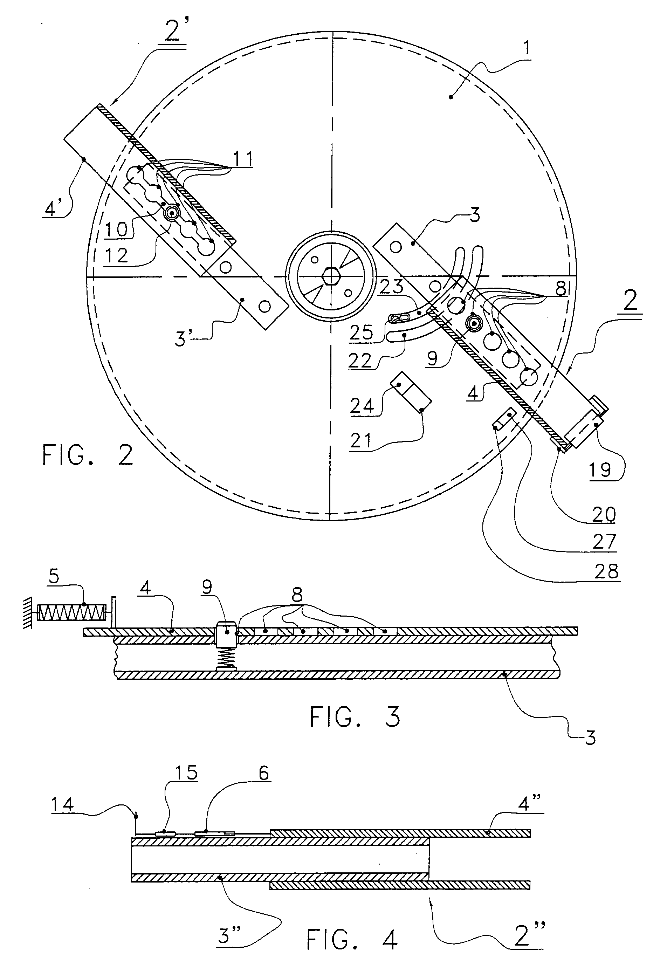

As shown in the schematically depicted embodiments in Figures 2, 3 and 4, one blade portion 4; 4'; 4" is lockable exclusively in a limited number of positions. This implies a considerable simplification of the adjustment of the length of the blade, so that adjustment errors can be prevented at least for the greater part.

In the embodiment depicted in Figure 2 the second blade portion 4 has a row of holes 8. The first blade portion 3 is provided with a movable protrusion 9 (see Figure 3) which is movable from a retracted to a projecting position. Thus said protrusion 9 can be placed in a hole 8 so as to lock the position of the blade portions relative to each other. The protrusion 9 can be compared with the protrusion in a telescopic umbrella or a cylinder lock with coupling pins. Of course, other locking means may be used, and it is also possible that the first blade portion comprises the holes and that the second blade portion comprises the protrusion. The holes may further be provided in walls of the blade portions.

Alternatively, the second blade portion 4' may be provided with an elongated slotted hole 10 with lateral recesses 11, and the first blade portion 3' is provided with a pin 12 which is movable from a retracted to a projecting position. Thus the pin 12 can be placed in a recess 11 so as to lock in this manner the position of the blade portions relative to each other. Also in this situation other locking means are possible as well, and the slotted hole may also be placed in the other blade portion.

Positioning the locking means takes place for example by spring force, although this may also take place pneumatically, hydraulically, or electromagnetically.

Therefore, locking one blade portion in the limited number of positions is automatically, mechanically performed. The person skilled in the art has numerous means at his disposal for realizing this.

As shown by way of example in Figure 3 with reference to an embodiment, pre-tensioning members 5 force the blade portion 4 to at least one of the limited number of positions. Said pre-tensioning members 5, in the embodiment shown constituted by a spring although other means such as pneumatic, hydraulic or electromagnetic means are possible as well, ensure that the position of one blade portion relative to the other is always one of the limited number of positions.

The shiftable blade portion can be drawn or pushed manually into one of the limited number of positions, the position being locked by snapping of the protrusion or the pin.

Figure 4 shows schematically an embodiment in which the device comprises drive means 6 for shifting one blade portion 4" to a position in a driven manner. As a result thereof manual positioning is no longer required, which implies moreover an extra protection for the operating person. The drive means 6, also in this case constituted by pneumatic, hydraulic or electromagnetic drive means, are controlled by control means 7, preferably electronic control means.

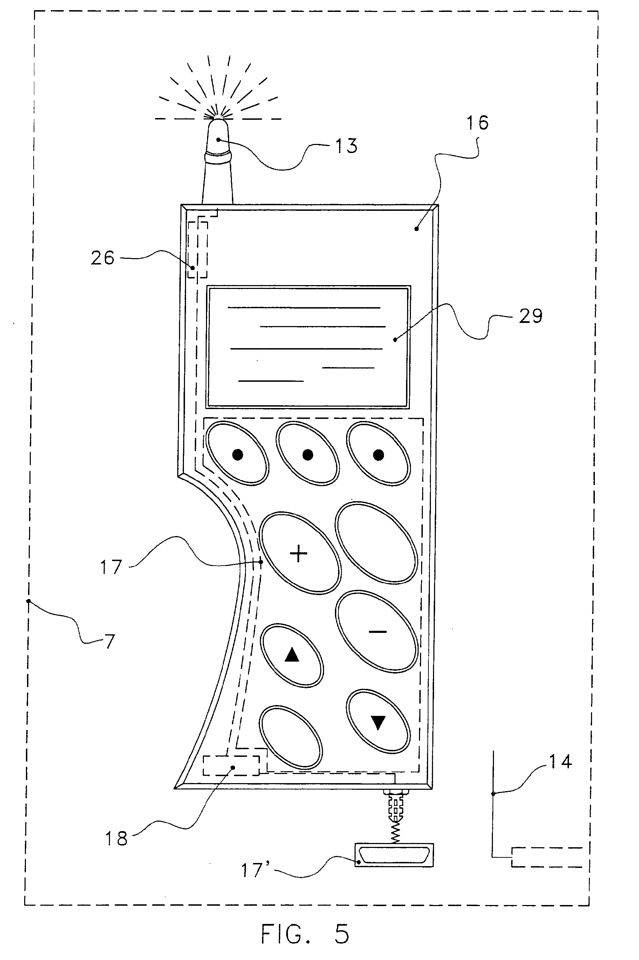

Such control means are schematically shown in Figure 5. They comprise a transmitter 13 for transmitting control signals. The control signals are received by a receiver 14. The receiver 14 is connected with an activating member 15 for the drive means 6. The activating member 15 activates the drive means 6 in dependence of the control signals received. Thus one blade portion 4" is shifted in dependence of the control signals transmitted.

The control means 7 may comprise a computer 16 which is provided with an inputting means 17, 17' for inputting data. On the basis of the inputted data, a calculating member 18 calculates control signals corresponding with the inputted data for shifting one blade portion 4". Of course, the control signals are supplied to the transmitter 13. In this situation the calculating member may use for example a correspondence table stored in a memory. The values included in the correspondence table may be determined for example on the basis of spreading trials of fertilizer. The input of the data can take place manually by using a keyboard, touch screen, or the like.

For example, in the latter case the presence of a screen 29 is required. Said screen 29 may be used for checking the input of the data, but may also be used for making the adjustment of e.g. the length of the blades more user-friendly. By correct programming, for example, it is possible to request the user to input the necessary data, so that no actions are forgotten. For example, on the screen 29 the request may appear to adjust the working range, to input the type and weight of the fertilizer and the like. In dependence of the correspondence table the adjustment of the blades can then take place in a fully computerized manner.

Inputting data, in particular regarding the fertilizer, takes place in a simple manner when the inputting means comprise a scanning device 17' for a code, in particular a bar code, said bar code being applied to a container, e.g. a bag, of fertilizer. The code represents data regarding the contents of the container. The data relate at least to one of the characteristics belonging to the group consisting of the weight, the spreading in weight, the granule size, the spreading in granule size. In this situation, the scanning device 17' is used for reading the bar code on the container, and the correct data are automatically stored in the control means.

Therefore, such a container for fertilizer, provided with a bar code, said bar code representing data regarding the contents of the container, can advantageously be used in the device for spreading fertilizer.

There may be provided position measuring means 21 for measuring the position of the first blade portion 3; 3'; 3" relative to the second blade portion 4; 4'; 4". Such position measuring means 21 may be of a great variety, as known to the person skilled in the art, and photo sensors, sliding contacts and the like are possible without any doubt.

The blade 2, in particular the blade portion 4, is provided with an end portion 19 which is adjustable in height. Said end portion 19 is drivable by end portion drive means 20, so that adjustment by manual shifting or pushing is no longer necessary.

There are provided height measuring means 27 for measuring the height of the adjustable end portion 19.

The angle assumed by the blade 2 relative to the spreading disc 1 is adjustable by angle adjusting means 22. The angle adjusting means 22 are driven. Also in this case the drive means for the angle adjusting means may be constituted by pneumatic, hydraulic or electro-magnetic means, and may be controlled by the control means 7. Although the angle adjustment is shown by means of the blade 2, it will be obvious that all the blades have an angle adjustment.

The fertilizer spreader is provided with angle measuring means 23 for measuring the angle of the blade 2 relative to the spreading disc 1.

The adjustments measured may be used for checking purposes. The measuring means 21, 23, 27 may be provided with transmitting members 24; 25; 28 for transmitting measuring results to the control means 7. In this case the transmitter 13 is designed of course as a transmitter-receiver. The measuring results can thus be made visible on the screen 29. When the measured values deviate from the inputted values (via the correspondence table) a warning signal can be supplied. For that purpose the control means 7 are provided with comparing means 26 for comparing the inputted data with the measuring results. In dependence of the comparing results, that are supplied to the calculation member, alarm signals are generated for example.

## Claims

1. A device for spreading granular and/or pulverulent material, in particular fertilizer, comprising at least one blade (2; 2'; 2"), the angle assumed by the blade (2; 2'; 2") being adjustable by angle adjusting means (22), **characterized in that** the angle adjusting means (22) are driven.

2. A device as claimed in claim 1, **characterized in that** the device is provided with angle measuring means (23) for measuring the angle of the blade (2; 2'; 2").

3. A device as claimed in claim 1 or 2, the blade (2; 2'; 2") comprising a first blade portion (3; 3'; 3") and a second blade portion (4; 4'; 4"), the first blade portion (3; 3'; 3") and the second blade portion (4; 4'; 4") being shiftable relative to each other in a telescoping manner, at least one (4; 4'; 4") of the blade portions being longitudinally adjustable relative to the other one (3; 3'; 3") and lockable in various positions, **characterized in that** one blade portion (4; 4'; 4") is lockable exclusively in a limited number of positions.

4. A device as claimed in claim 3, **characterized in that** one blade portion (4; 4'; 4") is automatically, mechanically lockable in a limited number of positions.

5. A device as claimed in claim 3 or 4, **characterized in that** the device comprises pre-tensioning members (5) for forcing one blade portion (4; 4'; 4") to at least one of the number of positions.

6. A device as claimed in claim 3, 4 or 5, **characterized in that** the device comprises drive means (6) for shifting one blade portion (4; 4'; 4") to a position in a driven manner.

7. A device as claimed in claim 6, **characterized in that** the device comprises control means (7), preferably electronic control means, for controlling the drive means (6).

8. A device as claimed in any one of the preceding claims 3 to 7, **characterized in that** the first blade portion (3; 3'; 3") respectively the second blade portion (4; 4'; 4") is provided with a row of holes (8), and **in that** the second blade portion (4; 4'; 4") respectively the first blade portion (3; 3'; 3") is provided with a protrusion (9) that can be moved from a retracted to a projecting position and be placed in a hole (8).

9. A device as claimed in any one of the preceding claims 3 to 8, **characterized in that** the first blade portion (3; 3'; 3") respectively the second blade portion (4; 4'; 4") is provided with an elongated slotted hole (10) with lateral recesses (11), and **in that** the second blade portion (4; 4'; 4") respectively the first blade portion (3; 3'; 3") is provided with a pin (12) that can be moved from a retracted to a projecting position and be placed in a recess (11).

10. A device as claimed in claim 7, **characterized in that** the control means (7) comprise a transmitter (13) for transmitting control signals, a receiver (14) for receiving the control signals and an activating member (15) for the drive means (6), operated by the receiver (14) in dependence of the control signals received, for shifting one blade portion (4; 4'; 4").

11. A device as claimed in claim 10, **characterized in that** the transmitter (13) is operable by a driver of the device.

12. A device as claimed in claim 10 or 11, **characterized in that** the control means (7) comprise a computer (16) provided with an inputting means (17, 17') for inputting data and with a calculating member (18) for calculating control signals corresponding with the inputted data for shifting one blade portion (4; 4'; 4").

13. A device as claimed in claim 12, **characterized in that** the inputting means comprise a scanning device (17') for a code, in particular a bar code.

14. A device as claimed in any one of the preceding claims 3 to 13, **characterized in that** the device comprises position measuring means (21) for measuring the position of the first blade portion (3; 3'; 3") relative to the second blade portion (4; 4'; 4").

15. A device as claimed in any one of the preceding claims 3 to 14, the second blade portion being provided with an end portion (19) that is adjustable in height, **characterized in that** the end portion (19) is drivable by end portion drive means (20).

16. A device as claimed in claim 15, **characterized in that** the device is provided with height measuring means (27) for measuring the height of the adjustable end portion (19).

17. A device as claimed in claim 2, 14 or 16, **characterized in that** the measuring means (21, 23, 27) are provided with transmitting members (24; 25; 28) for transmitting measuring results to the control means (7).

18. A device as claimed in claim 17, **characterized in that** the control means (7) are provided with comparing means (26) for comparing the inputted data with the measuring results.

19. A method of spreading granular and/or pulverulent material, in which method a device as claimed in any one of the preceding claims is used, and in which method granular and/or pulverulent material is supplied to the device in containers, **characterized in that** the method comprises the step of providing the container with a code, said code representing data regarding the contents of the container.

20. A method as claimed in claim 19, **characterized in that** the method comprises the step of using a bar code as a code, and the step of reading the bar code on the container by means of the scanning device.

21. A method as claimed in claim 19 or 20, **characterized in that** the data relate to at least one of the characteristics belonging to the group consisting of the weight, the spreading in weight, the granule size, the spreading in granule size.

22. A container for granular and/or pulverulent material, in particular fertilizer, suitable for use in a method as claimed in any one of claims 19, 20 or 21, **characterized in that** the container is provided with a bar code, said bar code representing data regarding the contents of the container.

23. A container as claimed in claim 22, **characterized in that** the data relate to at least one of the characteristics belonging to the group consisting of the weight, the spreading in weight, the granule size, the spreading in granule size.
